# EUROPEAN PATENT SPECIFICATION

(11) **EP 1 296 035 B1**
(45) Date of publication and mention of the grant of the patent: **28.11.2007**
(21) Application number: 02021295.7
(22) Date of filing: 19.09.2002
(51) Int. Cl.: F02B 61/02, F02M 35/10

(54) **Motor vehicle having an internal combustion engine**
Motorrad mit einer Brennkraftmaschine
Motocycle avec un moteur à combustion interne

(30) Priority: 20.09.2001 JP 2001287113; 25.09.2001 JP 2001291760
(43) Date of publication of application: 26.03.2003
(73) Proprietor: Yamaha Hatsudoki Kabushiki Kaisha, Iwata-shi, Shizuoka-ken (JP)
(72) Inventor: Sugitani, Tsuyoshi, Iwata-shi, Shizuoka-ken (JP)
(74) Representative: Grünecker, Kinkeldey, Stockmair & Schwanhäusser Anwaltssozietät

(56) References cited:
- EP-A- 0 500 139
- EP-A- 0 594 462
- EP-A- 1 162 135
- JP-A- 2 123 236
- JP-A- 4 252 818
- JP-A- 8 082 218
- US-A- 5 353 752
- US-A- 5 474 039
- US-A- 5 564 383
- US-A- 5 743 244

## Description

The present invention relates to an internal combustion engine with an air intake passage. Furthermore, the present invention also relates a motor vehicle, especially a motorcycle, with an internal combustion engine.

Prior art documents US 5,743,244, JP 8-82218 A, JP 4-252818 A, US 5,564,383, JP 2-123236 A und EP 0 594 462 A1 teaches an internal combustion engine with an air intake passage, an intake valve provided at an end portion of the air intake passage and a fuel injector mounted in the air intake passage. Said end portion of the air intake passage comprises a curved portion having an inner wall surface on an inner diameter side of the curved portion. The fuel injector is arranged to inject fuel into the curved portion of the air intake passage. The prior art documents JP 8-82218 A and JP 2-123236 A discloses that said fuel injector is arranged to inject fuel toward the inner wall surface of the curved portion of the air intake passage.

A reduction in HC has been required as one countermeasure against the exhaust gas emission of an internal combustion engine. In particular, unburned gas is increased in the state where a throttle valve is fully opened in rapid starting or in rapid acceleration from a low speed, and a HC increase associated with the unburned gas increase has become a problem.

In an internal combustion engine, an intake valve is provided at the end portion of an intake passage communicating with the combustion chamber of a cylinder head, and a fuel injector is provided so as to face the intake passage near the intake valve and injects fuel. The fuel injector is usually disposed in such a way as to inject the fuel toward the back of the valve body of the intake valve.

In a motorcycle or the like having a very narrow space around an engine, because of a layout, the engine may be mounted with a cylinder inclined forward. In such an engine inclined forward, the intake passage is curved and connected from the upper side of the engine to the cylinder head. The fuel injector is provided at the bending portion of the air intake passage.

Also in the internal combustion engine of the motorcycle like this, it is necessary to take countermeasures against HC efficiently.

It is an objective of the present invention to provide an internal combustion engine with an air intake passage or a motor vehicle, especially a motorcycle, with an internal combustion engine, wherein an exhaust gas emission is improved.

According to the present invention, said objective is solved by an internal combustion engine with an air intake passage, an intake valve provided at an end portion of the air intake passage and a fuel injector mounted in the air intake passage, wherein said end portion of the air intake passage comprises a curved portion having an inner wall surface on an inner diameter side of the curved portion and the fuel injector is arranged to inject fuel toward the inner wall surface of the curved portion of the air intake passage, wherein a heat insulating material is disposed in the curved portion of the air intake passage between said end portion of the air intake passage and a position of the fuel injector.

Furthermore, said objective is also solved by a motor vehicle, especially motorcycle, with such internal combustion engine, wherein said engine comprises a cylinder which is inclined in forward direction of the vehicle and said air intake passage is routed above said cylinder and said curved portion said air intake passage is curved in a downward direction of the vehicle.

Accordingly, such an internal combustion engine provides a reduced HC emission.

According to a preferred embodiment, the air intake passage communicates with an upper side of a cylinder head of a cylinder of said engine.

According to a preferred embodiment, said cylinder is inclined forwardly.

According to a preferred embodiment, said air intake passage comprises an intake manifold and an intake pipe providing said curved portion. Said fuel injector is mounted on said intake pipe.

According to a preferred embodiment, said air intake passage comprises a throttle body having a throttle valve, wherein said curved portion is provided between said end portion of the air intake passage and the throttle body.

According to a preferred embodiment, said curved portion of the air intake passage is curved substantially in a single plane.

Hereinafter, the present invention is illustrated and explained by means of preferred embodiments with reference to accompanying drawings. In the drawings wherein:
- Fig. 1: is an external view of a small-sized motorcycle;
- Fig. 2: is a side view showing a main portion of the motorcycle in Fig. 1;
- Fig. 3: is a plan view showing a main portion of the motorcycle in Fig. 1;
- Fig. 4: is a configurational view of an engine part of the motorcycle in Fig. 1;
- Fig. 5: is a configurational view of an air intake passage according to an embodiment;
- Fig. 6: is a graph showing the effect that the injection direction of a fuel injector has on HC; and
- Fig.7: is a configurational view of an intake passage.

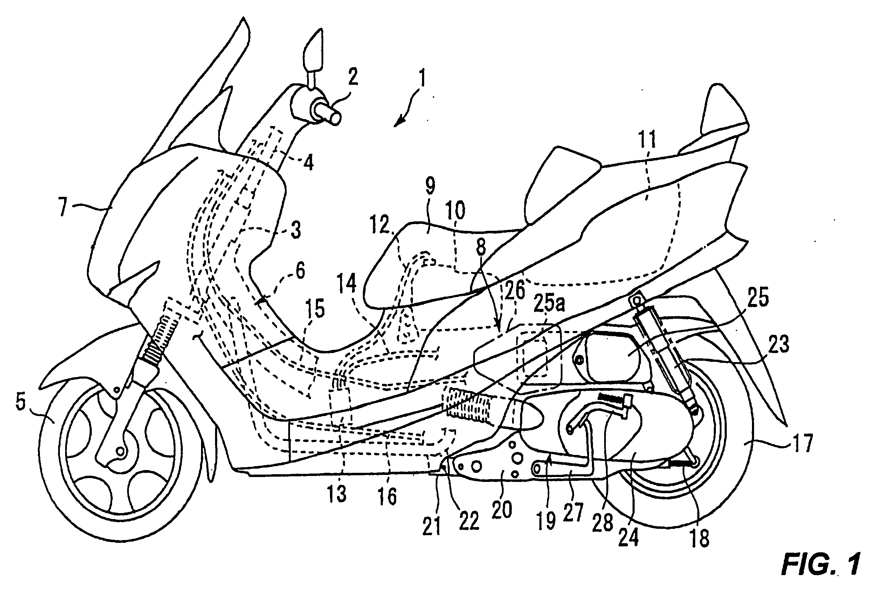

In a vehicle body 1, a handlebar 2 is provided at the front portion and is connected to a front wheel 5 via a steering shaft 4 into which a head pipe 3 is passed. To the head pipe 3 is joined a vehicle body frame 6. The vehicle body frame 6 forms the frame structure of a whole vehicle body. The front portion of the vehicle body is covered with a cowling 7. The vehicle body 1 is covered with a vehicle body cover 8 from the outside of the vehicle body frame 6. A seat 9 is provided at the center of the vehicle body and a fuel tank 10 is provided under the seat 9, and a helmet box (container) 11 is provided on the rear side thereof. The fuel tank 10 supplies fuel to a fuel injector (not shown in Fig. 1) via a fuel hose (not shown in Fig.1). One end of a breather hose 12 is connected to the top portion of the fuel tank 10 and the other end thereof is connected to a canister 13. The canister 13 is connected to an air intake system (for example, throttle body) via a purge hose 14. A throttle wire 15 is mounted on the throttle grip (or lever) of the right portion of the handlebar (not shown) and is connected to the throttle valve of the air intake system. Similarly, a brake cable 16 is mounted on the brake lever (not shown) of the handlebar and is connected to the brake camshaft 18 of a rear wheel 17.

An engine unit 19 is mounted on the vehicle body frame 6 at the center portion of the vehicle body. The engine unit 19 is constructed of an engine (not shown in Fig.1) and a speed reducing gear 24 integrally combined with its crankcase (not shown). The engine unit 19 is suspended from a lower vehicle body frame member 21 constituting apart of the vehicle frame 6 via an engine bracket 20 such that it can turn around a pivot 22. To the rear portion of the engine unit 19 is connected the rear wheel 17 and is rotatably mounted the bottom end of a damper 23. The top end of the damper 23 is rotatably mounted to a rear vehicle body frame (not shown in Fig. 1) constituting a part of the vehicle body frame 6. In this manner, the engine unit 19 can swing around the pivot 22 with the rear wheel 17, which forms a swing unit type engine.

On the upper side of the speed reducing gear 24 is provided an air cleaner 25. In the front portion of the air cleaner 25 is made an outside air introducing port 25a. A dust prevention cover 26 made of rubber or resin is provided on the inside of the vehicle body cover 8 so as to cover the port 25a. A reference numeral 27 denotes a stand and a reference numeral 28 denotes a kick lever.

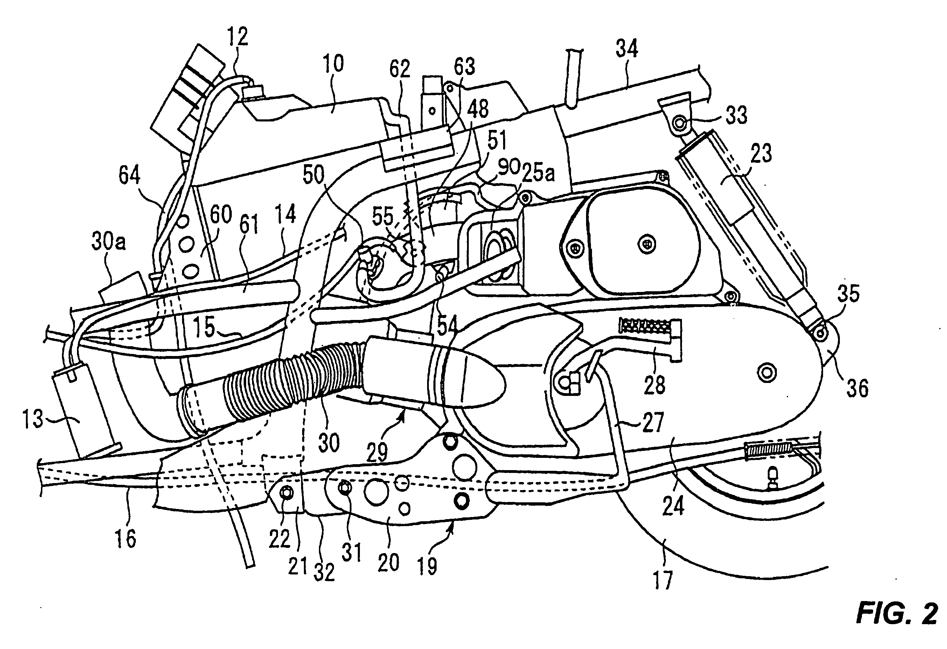

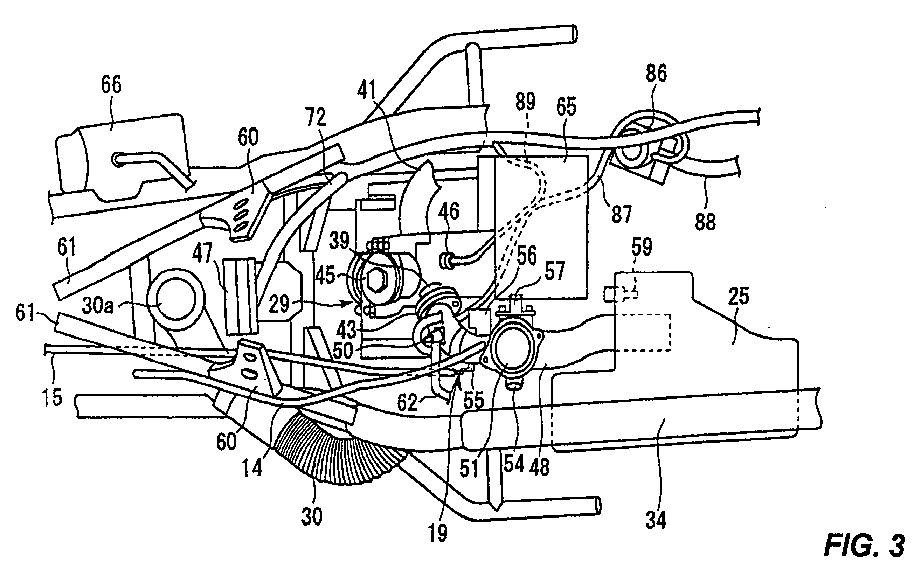

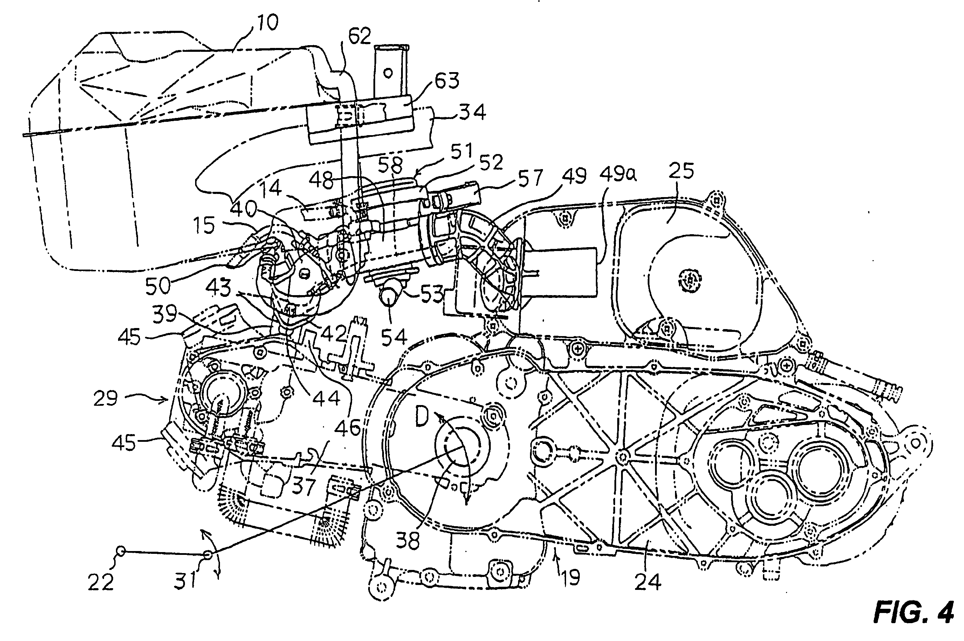

Fig. 2 and Fig. 3 are a side view and a plan view to show the main portion of a motorcycle provided with an internal combustion engine in accordance with the embodiment described above. Fig. 4 is an enlarged view of its air intake system portion.

The engine 29 is provided under the fuel tank 10. The engine 29 is a four-cycle single-cylinder engine provided with a fuel injector. The crankcase (not shown) of the engine 29 is integrally combined with the speed reducing gear 24 constructed of a continuously variable speed reducing mechanism of a V-belt type, for example, to form the engine unit 19 of a swing unit engine type as a whole. A duct 30 is connected to the front portion of the speed reducing gear 24 and sucks outside air from its open end portion 30a and supplies the outside air to the inside of the speed reducing gear 24 to cool the inside thereof. The rear output shaft (not shown) of the speed reducing gear 24 is connected to the axle of the rear wheel 17.

The engine bracket 20 is integrally combined with the front portion of the swing unit type engine unit 19. A link plate 32 is rotatably mounted on the engine bracket 20 via a shaft 31. The link plate 32 is rotatably mounted on the lower vehicle body frame member 21 via the pivot 22.

The damper (shock absorber) 23 is provided on the rear portion of the engine unit 19. In the damper 23, its top end 33 is rotatably mounted on the rear vehicle frame member 34 and its bottom end 35 is rotatably mounted on the bracket 36 of the rear end portion of the engine unit 19. In this manner, the engine unit 19 is mounted on the vehicle body frame in such a way as to swing around the pivot 22 on its front side. As shown in Fig. 4, the cylinder 37 of the engine 29 is inclined forward almost to a horizontal level. A crankshaft 38 swings around the pivot 22 described above, as shown by an arrow D, with the shaft 31 of the engine bracket 20 (Fig. 2)

On the air intake side of the engine 29 are provided an (air) intake manifold 39 communicating with the intake port (not shown) of the cylinder head and an intake pipe 40 (Fig. 3, Fig. 4) connected to the intake manifold 39, and to the exhaust side of the engine 29 is provided an exhaust pipe 41 (Fig. 3). The intake pipe 40 is an intake pipe that is curved and shaped like an elbow and, as shown in Fig. 4, its flange 43 is abutted against the flange of the intake manifold 39 via a heat insulating material 42 made of resin and is fixed thereto with two bolts 44. A reference numeral 45 is the maintenance cover of a valve cam. The engine 29 is provided with a water temperature sensor 46 (Fig. 3, Fig. 4). The detection output signal of the water temperature sensor 46 is sent to an engine control unit 47 (Fig. 3) via a water temperature signal cable 89 (Fig. 3) and a wire harness 72. The detection signal cables of an intake air temperature sensor and an intake air pressure sensor (not shown), which will be described below, are further connected to the engine control unit 47 via the wire harness 72. The throttle valve (not shown in Figs. 1 to 4) is opened or closed based on these detection data.

A throttle body 48 is connected to the intake manifold 39 via the above-mentioned intake pipe 40 that is curved and shaped like an elbow. The throttle body 48 is connected to the air cleaner 25 via a joint 49. The intake pipe 40 is provided with the fuel injector 50.

The throttle valve (not shown in the Figs. 1 to 4) is mounted in the throttle body 48 and a diaphragm type suction piston 51 is mounted on its upstream side. In the suction piston 51, as described below, its diaphragm chamber 52 is provided on the upper side of the throttle body 48 and an atmosphere introduction port (atmosphere open end portion) 54 of an atmosphere passage 53 for introducing the atmosphere into the diaphragm chamber 52 is made in the lower side of the throttle body 48. The throttle wire 15 connected to the throttle lever, the throttle grip or the like (not shown) is connected to the valve shaft of the throttle valve via a link 55.

The air introduction port 25a of the front portion of the air cleaner 25 is covered with the dust prevention cover 26 (shown by a single dot and dash line in Fig. 1) made of rubber, resin or the like. A vehicle cover is mounted on the outside of the dust prevention cover 26. The atmosphere introduction port 54 of the suction piston 51 is opened to the inside of the dust prevention cover 26.

An automatic choke 56 of heater-style wax type and an intake air pressure sensor 57 are mounted on the throttle body 48 adjacently to the suction piston 51 (Fig. 3). The automatic choke 56 opens or closes a bypass pipe (not shown) that makes the upstream side of the throttle valve communicate with the downstream side thereof. The intake air pressure sensor 57 communicates with the intake manifold 39 or the intake pipe 40 via a negative pressure hose 58 (Fig. 4). An intake air temperature sensor 59 (Fig. 3) is provided in the air cleaner 25.

Here, the intake air pressure sensor 57 may be provided near the intake manifold. Moreover, a throttle position sensor (not shown) may be provided on the valve shaft of the throttle valve opposite to the link 55. In this case, the automatic choke 56 is provided on the upstream side of the throttle valve such that it does not interfere with the throttle position sensor.

The front lower portion of the fuel tank 10 is fixed to the right and left vehicle frame members 61 via the bracket 60. A fuel hose 62 is pulled out of the rear portion of the fuel tank 10 to supply fuel to the fuel injector 50. The fuel hose 62 is fixed to the rear vehicle body frame member 34 via a stay 63 (Fig. 2, Fig. 4). A reference numeral 64 (Fig. 2) denotes an overflow pipe. A reference numeral 65 (Fig. 3) denotes a battery. A reference numeral 66 (Fig. 3) denotes the recovery tank of a cooling water. On the right side of the center portion of the vehicle body, as shown in Fig. 3, is provided a secondary air introduction system 86 for cleaning exhaust gas. The secondary air introduction system 86 communicates with the intake manifold 39 via a negative pressure hose 87 and supplies outside air to a catalyst (not shown) via an air hose 88 according to the intake air negative pressure to bum the exhaust gas again.

To the air cleaner 25, as shown in Fig. 2, is connected a blow-by gas hose 90. The blow-by gas hose 90 communicates with a cam chain chamber (not shown) communicating with the crankcase (not shown) of the engine 29 and prevents the drop of an oil seal or the loss of power caused by a pressure increase in the crankcase of the engine. The blow-by gas hose 90 is connected to the clean side after the element in the air cleaner passes and the blow-by gas is introduced into the combustion chamber again.

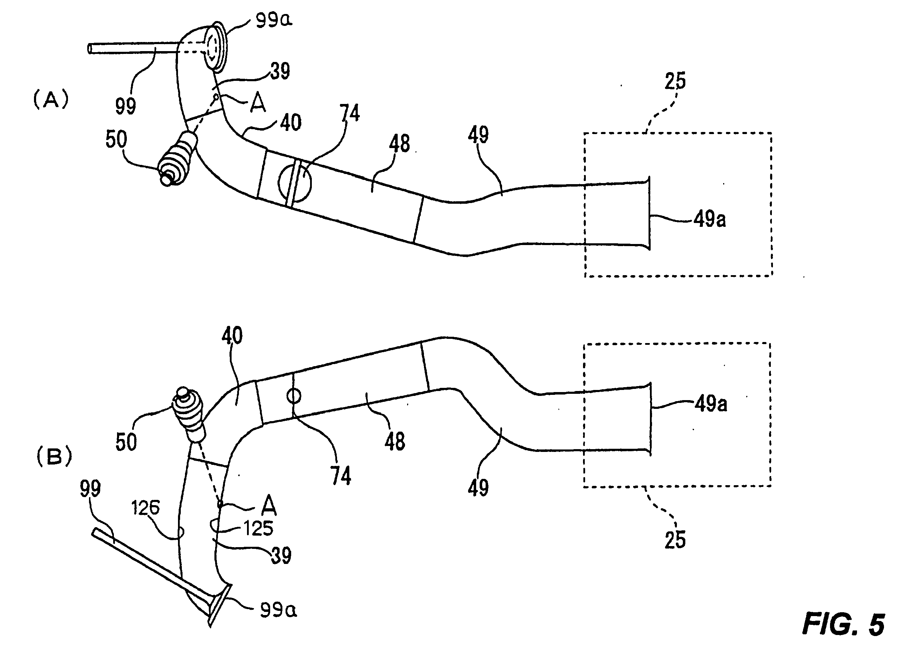

Fig. 5 is an illustration to show a position where the fuel injector of the engine of the motorcycle described above is mounted, and (A) is a plan view and (B) is a side view.

As shown in the drawings, the intake passage of the air intake system is constructed of the intake manifold 39, the intake pipe 40, the throttle body 48 and the joint 49, which are connected to each other as described above, and the air cleaner 25 communicating with this. A reference numeral 74 denotes the throttle valve. On the end portion of the intake manifold 39 is mounted an intake valve 99 facing the combustion chamber of the cylinder head (not shown). The valve body 99a of the intake valve 99 opens or closes the combustion chamber (not shown).

The cylinder of the engine is inclined forward, as described above, and the intake manifold 39 and the intake pipe 40 that constitute the intake passage, as shown in Fig. 5 (B), are formed such that they are curved above the intake valve 99 in the vertical section and communicate with the combustion chamber (not shown).

The fuel injector 50 is arranged such that the injector injects fuel toward a point A on an inside wall surface 125 that is the inner diameter side of the curved portion of the intake passage. This configuration reduces HC in the exhaust gas as compared with the case where the injector injects the fuel toward the outside wall surface 126 that is the outer diameter side of the curved portion or the case where the injector injects the fuel toward the back of the valve body 99a of the intake valve 99. According to one example of the experiment data, the amount of exhaust of HC in the state where the throttle valve is fully opened at low speeds was 5000 ppm in the case where the injector injects the fuel toward the valve body 99a, 15000 ppm in the case where the injector injects the fuel toward the outside wall surface 126, and 3000 ppm in the case where the injector injects the fuel toward the inside wall surface 125.

In the case where the injector injects the fuel toward the outside wall surface 126, it is thought that the liquid fuel hitting the wall surface falls down on the wall surface and tends to accumulate in the end portion of the intake passage on the lower edge side of the valve and is sucked into the combustion chamber to become unburned gas to increase the amount of HC. In the case where the injector injects the fuel toward the back of the valve, it is thought that when the injector injects the fuel at the timing of the opening of the valve, the fuel tends to be easily blown off and thus the amount of HC increases at low rotational speeds where the valve is open for a long time.

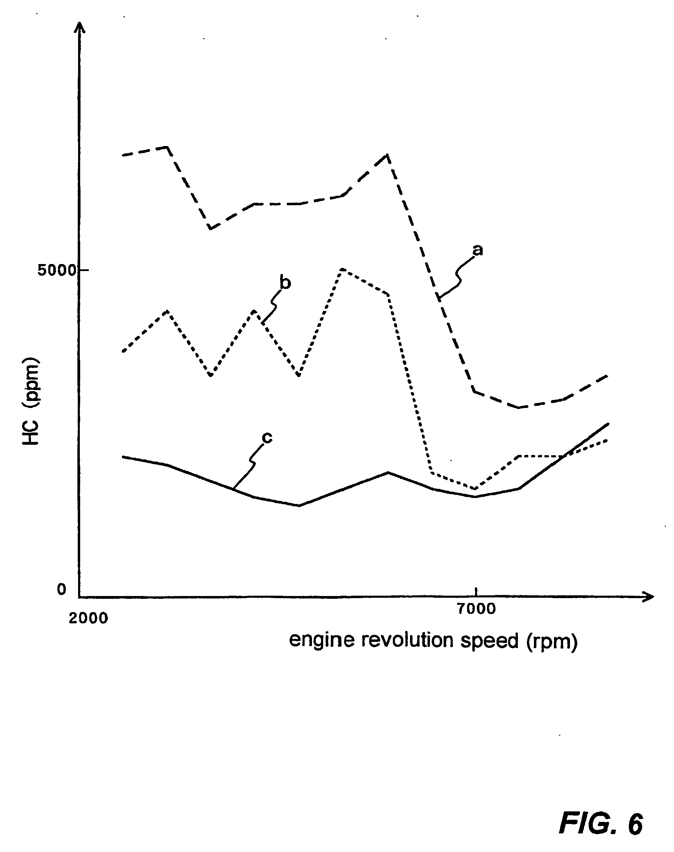

Fig. 6 is a graph to show the effect that the injection direction of the fuel injector has on HC. A reference symbol a denotes the amount of exhaust of HC in the case where the injector injects the fuel toward the outside wall surface 126, b denotes the amount of exhaust of HC in the case where the injector injects the fuel toward the back of the valve body 99a, c denotes the amount of exhaust of HC in the case where the injector injects the fuel toward the inside wall surface 125. As can be seen from the graph, injecting the fuel toward the inside wall surface makes the effect of reducing the amount of HC noticeable particularly in the range of low rotational speeds.

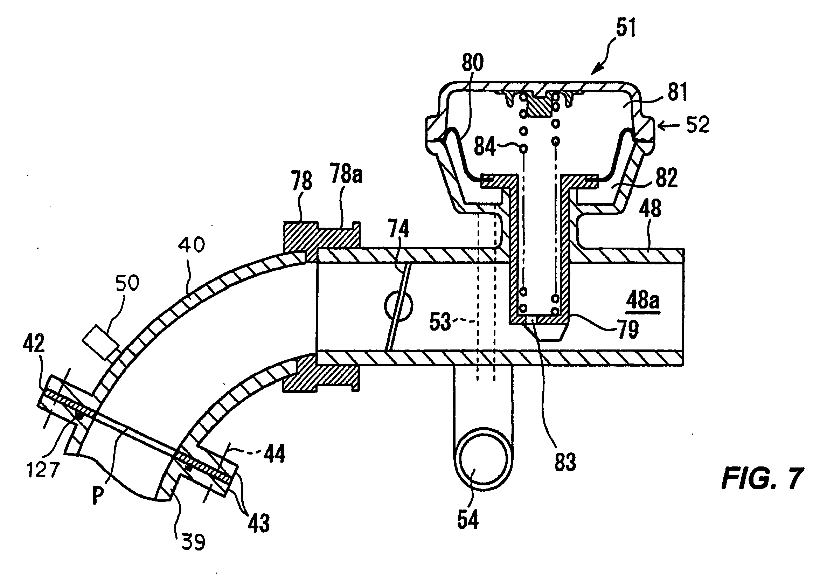

Fig. 7 is a configurational view of an intake passage. As described above, the intake pipe 40 mounted with the fuel injector 50 is connected to the intake manifold 39 formed on the cylinder head of the engine at the mating surface P on the engine side. In this case, both flanges 43 of the intake pipe 40 and the intake manifold 39 are abutted against each other and are fixed to each other by bolts 44 with the heat insulating material 42 interposed with an O-ring 127 between them.

In this manner, the heat insulating material 42 disposed in the intake passage on the engine side of the fuel injector 50 insulates heat transmitted from the engine to the intake pipe 40 via the intake manifold 39 and thus reduces thermal effect on the fuel injector 50 and keeps an internal combustion function of high reliability.

The intake pipe 40 is made of an aluminum alloy, for example, and a rubber joint 78 is backed and fixed to its upstream end portion. The throttle body 48 is pressed into the rubber joint 78 and a band (not shown) is fitted in the depression 78a on the outer peripheral portion of the rubber joint 78 and is fixedly fastened thereto. Connecting the throttle body 48 to the intake pipe 40 via the rubber joint 78 like this stops the vibration from the engine, prevents the leak of noises from the air cleaner to the outside, and reduces the thermal effect to a suction piston 51, the throttle valve 74 and the like that are mounted on the throttle body 48 to achieve an action of high accuracy and high reliability.

The suction piston 51 is constructed of a diaphragm chamber 52 that is integrally formed on the upper side of the throttle body 48 and a piston 79 that is moved back and forth in the intake passage 48a of the throttle body 48. The diaphragm chamber 52 has the first chamber (upper chamber) 81 and the second chamber (lower chamber) 82 that are partitioned by a diaphragm 80. The first chamber 81 passes through the diaphragm 80 and communicates with the inside of the piston 79. A negative pressure port 83 is formed at the tip of the piston 79 to introduce an intake air negative pressure into the first chamber 81. A spring 84 is provided between the ceiling surface of the diaphragm chamber 52 and the bottom portion of the piston 79. The spring 84 urges the piston 79 in the direction in which the piston is moved in the intake passage 48a of the throttle body 48 (that closes the intake passage 48a). The intake air negative pressure introduced into the piston 79 acts on the piston 79 in the direction in which the piston 79 is pulled up against the spring 84 (that opens the intake passage 48a).

An atmosphere passage 53 passing through the outside surface of the throttle body 48 communicates with the second chamber 82 on the lower side of the diaphragm 80. The atmosphere introduction port 54 formed at the end portion of the atmosphere passage 53 is opened to the lower side of the throttle body 48. The atmospheric pressure introduced from the atmosphere introduction port 54 acts on the second chamber 82. Therefore, a force responsive to a pressure difference between the first chamber 81 and the second chamber 82, which are formed on both sides of the diaphragm 80, acts on the diaphragm 80 and moves the piston 79 back and forth in the direction that opens and closes the piston 79.

As described above, in accordance with the embodiment, by injecting the fuel toward the inner wall surface of the intake passage on the inner diameter side (inside the curved shape) of the curved intake passage, HC emission can be reduced as compared with the case where the fuel is injected toward the intake valve body or the inner wall surface of the intake passage on the outer diameter side (outside the curved shape) of the intake passage.

According to the embodiment, a fuel injector arrangement structure is provided for reducing the amount of HC in an internal combustion engine. In the injection arrangement structure of the internal combustion engine in which an intake valve 99 is provided at the end portion of a curved intake passage (intake manifold 39, intake pipe 40) and in which an injector 50 is mounted in the intake passage near the intake valve, the injector 50 is arranged in such a way that the injector 50 injects fuel toward the inner wall surface (inside wall surface 125) of the intake passage on the inner diameter side at the curved portion of the intake passage.

The embodiment described above provides an injector arrangement structure of an internal combustion engine of the type in which an intake valve 99 is provided at the end portion of a curved intake passage, and in which an injector 50 is mounted in the intake passage near the intake valve 99, wherein the injector 50 is arranged in such a way that the injector 50 injects fuel toward the inner wall surface 125 of the intake passage on the inner diameter side of the curved portion of the intake passage.

According to this constitution, by injecting the fuel toward the inner wall surface 125 of the intake passage on the inner diameter side (inside the curved shape) of the curved intake passage, HC emission can be reduced as compared with the case where the fuel is injected toward the intake valve body or the inner wall surface of the intake passage on the outer diameter side (outside the curved shape) of the intake passage. This is verified by experiments.

According to the specific embodiment, the intake passage communicates with the upper side of the cylinder head of a cylinder inclined forward. According to this constitution, particularly in the case of the engine inclined forward, the intake passage is arranged curvedly above the cylinder head. Therefore, the injector arrangement in accordance with the embodiment can be effectively applied to the engine inclined forward.

According to the specific embodiment, a heat insulating material is disposed in the intake passage nearer to the engine side than the fuel injector. According to this constitution, even in the case where the fuel injector is provided near to the engine, heat and vibration that are generated by the engine and transferred to the intake passage (intake pipe) are blocked by the heat insulating material. Therefore, this constitution reduces thermal effect and vibration to the fuel injector and thus keeps a function of high reliability.

The embodiment mentioned above teaches an internal combustion engine with an air intake passage 39, 40, 48, 49, an intake valve 99 provided at an end portion of the air intake passage 39, 40, 48, 49 and a fuel injector 50 mounted in the air intake passage. Said end portion of the air intake passage 39, 40, 48, 49 comprises a curved portion having an inner wall surface on an inner diameter side of the curved portion and the fuel injector 50 is arranged to inject fuel toward the inner wall surface 125 of the curved portion the air intake passage 39, 40, 48, 49.

The air intake passage 39, 40, 48, 49 communicates with an upper side of a cylinder head of a cylinder of said engine 29. A heat insulating material 42 is disposed the air intake passage 39, 40, 48, 49 between said end portion of the air intake passage 39, 40, 48, 49 and a position of the fuel injector 50. Said heat insulating material 42 is disposed in the curved portion of the air intake passage 39, 40, 48, 49.

According to the specific embodiment, said air intake passage comprises an intake manifold 39 and an intake pipe 40 providing said curved portion. Said fuel injector 50 is mounted on said intake pipe 40. Said air intake passage comprises a throttle body 48 having a throttle valve 74. Said curved portion is provided between said end portion of the air intake passage and the throttle body 48. Said curved portion of the air intake passage is curved substantially in a single plane.

The embodiment mentioned above teaches a motor vehicle, especially motorcycle, with an internal combustion engine which is inclined in forward direction of the vehicle and said air intake passage is routed above said cylinder 37 and said curved portion said air intake passage is curved in a downward direction of the vehicle.

## Claims

1. Internal combustion engine with an air intake passage (39, 40, 48, 49), an intake valve (99) provided at an end portion of the air intake passage (39, 40, 48, 49) and a fuel injector (50) mounted in the air intake passage (39, 40, 48, 49), wherein said end portion of the air intake passage (39, 40, 48, 49) comprises a curved portion having an inner wall surface on an inner diameter side of the curved portion and the fuel injector (50) is arranged to inject fuel toward the inner wall surface (125) of the curved portion of the air intake passage (39, 40, 48, 49), wherein a heat insulating material (42) is disposed in the curved portion of the air intake passage (39, 40, 48, 49) between said end portion of the air intake passage (39, 40, 48, 49) and a position of the fuel injector (50).

2. Internal combustion engine according to claim 1, wherein the air intake passage (39, 40, 48, 49) communicates with an upper side of a cylinder head of a cylinder of said engine (29).

3. Internal combustion engine according to claim 2, wherein said cylinder (37) is inclined forwardly.

4. Internal combustion engine according to at least one of the claims 1 to 3, wherein said air intake passage (39, 40, 48, 49) comprises an intake manifold (39) and an intake pipe (40) providing said curved portion.

5. Internal combustion engine according to claim 4, wherein said fuel injector (50) is mounted on said intake pipe (40).

6. Internal combustion engine according to at least one of the claims 1 to 5, wherein said air intake passage (39, 40, 48, 49) comprises a throttle body (48) having a throttle valve (74), wherein said curved portion is provided between said end portion of the air intake passage and the throttle body (48).

7. Internal combustion engine according to at least one of the claims 1 to 6, wherein said curved portion of the air intake passage (39, 40, 48, 49) is curved substantially in a single plane.

8. Motor vehicle, especially motorcycle, with an internal combustion engine according to at least one of the claims 1 to 7, wherein said engine comprises a cylinder (37) which is inclined in forward direction of the vehicle and said air intake passage (39, 40, 48, 49) is routed above said cylinder (37) and said curved portion said air intake passage (39, 40, 48, 49) is curved in a downward direction of the vehicle.

## Patentansprüche

1. Brennkraftmaschine mit einem Lufteinlasskanal (39, 40, 48, 49), einem Einlassventil (99), vorgesehen an einem Endabschnitt des Lufteinlasskanals (39, 40, 48, 49) und einem Kraftstoffeinspritzer (50), montiert in dem Lufteinlasskanal (39, 40, 48, 49), wobei der Endabschnitt des Lufteinlasskanals (39, 40, 48, 49) einen gekrümmten Abschnitt aufweist, der eine Innenwandoberfläche auf einer Innendurchmesserseite des gekrümmten Abschnittes aufweist und der Kraftstoffeinspritzer (50) angeordnet ist, um Kraftstoff in die Richtung zu der Innenwandoberfläche (125) des gekrümmten Abschnittes des Lufteinlasskanals (39, 40, 48, 49) einzuspritzen, wobei ein wärmeisolierendes Material (42) in dem gekrümmten Abschnitt des Lufteinlasskanals (39, 40, 48, 49) zwischen dem Endabschnitt des Lufteinlasskanals (39, 40, 48, 49) und einer Position des Kraftstoffeinspritzers (50) angeordnet ist.

2. Brennkraftmaschine nach Anspruch 1, wobei der Lufteinlasskanal (39, 40, 48, 49) mit einer Oberseite eines Zylinderkopfes eines Zylinders des Motors (29) verbunden ist.

3. Brennkraftmaschine nach Anspruch 2, wobei der Zylinder (37) nach vorn geneigt ist.

4. Brennkraftmaschine nach zumindest einem der Ansprüche 1 bis 3, wobei der Lufteinlasskanal (39, 40, 48, 49) aufweist einen Einlassverteiler (39) und ein Einlassrohr (40), das den gekrümmten Abschnitt bildet.

5. Brennkraftmaschine nach Anspruch 4, wobei der Kraftstoffeinspritzer (50) an dem Einlassrohr (40) montiert ist.

6. Brennkraftmaschine nach zumindest einem der Ansprüche 1 bis 5, wobei der Lufteinlasskanal (39, 40, 48, 49) aufweist einen Drosselkörper (48) mit einem Drosselventil (74), wobei der gekrümmte Abschnitt zwischen dem Endabschnitt des Lufteinlasskanals und dem Drosselkörper (48) vorgesehen ist.

7. Brennkraftmaschine nach zumindest einem der Ansprüche 1 bis 6, wobei der gekrümmte Abschnitt des Lufteinlasskanals (39, 40, 48, 49) im Wesentlichen in einer einzigen Ebene gekrümmt ist.

8. Kraftfahrzeug, insbesondere Motorrad, mit einer Brennkraftmaschine nach zumindest einem der Ansprüche 1 bis 7, wobei der Motor einen Zylinder (37) aufweist, der in die Vorwärtsrichtung des Fahrzeuges geneigt ist und der Lufteinlasskanal (39, 40, 48, 49) oberhalb des Zylinders (37) geführt wird und der gekrümmte Abschnitt des Lufteinlasskanals (39, 40, 48, 49) in eine abwärtige Richtung des Fahrzeuges gekrümmt ist.

## Revendications

1. Moteur à combustion interne avec un passage d'admission d'air (39, 40, 48, 49), une soupape d'admission (99) prévue à une partie d'extrémité du passage d'admission d'air (39, 40, 48, 49), et un injecteur de carburant (50) monté dans le passage d'admission d'air (39, 40, 48, 49), dans lequel ladite partie d'extrémité du passage d'admission d'air (39, 40, 48, 49) comprend une partie incurvée, ayant une surface de paroi intérieure sur un côté de diamètre intérieur de la partie incurvée, et l'injecteur de carburant (50) est agencé pour injecter du carburant vers la surface de paroi intérieure (125) de la partie incurvée du passage d'admission d'air (39, 40, 48, 49), dans lequel un matériau d'isolation thermique (42) est disposé dans la partie incurvée du passage d'admission d'air (39, 40, 48, 49), entre ladite partie d'extrémité du passage d'admission d'air (39, 40, 48, 49) et une position de l'injecteur de carburant (50).

2. Moteur à combustion interne selon la revendication 1, dans lequel le passage d'admission d'air (39, 40, 48, 49) communique avec un côté supérieur d'une culasse d'un cylindre dudit moteur thermique (29).

3. Moteur à combustion interne selon la revendication 2, dans lequel ledit cylindre (37) est incliné vers l'avant.

4. Moteur à combustion interne selon au moins l'une des revendications 1 à 3, dans lequel ledit passage d'admission d'air (39, 40, 48, 49) comprend un collecteur d'admission (39) et un tube d'admission (40), fournissant ladite partie incurvée.

5. Moteur à combustion interne selon la revendication 4, dans lequel ledit injecteur de carburant (50) est monté sur ledit tube d'admission (40).

6. Moteur à combustion interne selon au moins l'une des revendications 1 à 5, dans lequel ledit passage d'admission d'air (39, 40, 48, 49) comprend un corps d'étranglement (48) ayant un clapet d'étranglement (74), dans lequel ladite partie incurvée est prévue entre ladite partie d'extrémité du passage d'admission d'air et le corps d'étranglement (48).

7. Moteur à combustion interne selon au moins l'une des revendications 1 à 6, dans lequel ladite partie incurvée du passage d'admission d'air (39, 40, 48, 49) est incurvée, sensiblement dans un plan unique.

8. Véhicule automobile, spécialement motocycle, avec un moteur à combustion interne selon au moins l'une des revendications 1 à 7, dans lequel ledit moteur thermique comprend un cylindre (37), incliné dans la direction de l'avant du véhicule, et ledit passage d'admission d'air (39, 40, 48, 49) chemine au-dessus dudit cylindre (37), et ladite partie incurvée dudit passage d'admission d'air (39, 40, 48, 49) est incurvée en direction du bas du véhicule.
